# EUROPÄISCHE PATENTSCHRIFT

(11) **EP 1 306 236 B1**
(45) Veröffentlichungstag und Bekanntmachung des Hinweises auf die Patenterteilung: **13.12.2006**
(21) Anmeldenummer: 02018438.8
(22) Anmeldetag: 16.08.2002
(51) Int. Cl.: B60D 1/14

(54) **Abschleppvorrichtung für ein Kraftfahrzeug**
Towing device for a motor vehicle
Dispositif de remorquage pour un véhicule automobile

(30) Priorität: 26.10.2001 DE 10153032
(43) Veröffentlichungstag der Anmeldung: 02.05.2003
(73) Patentinhaber: AUDI AG, 85045 Ingolstadt (DE)
(72) Erfinder: Haffner, Peter, 32683 Barntrup (DE); Kruse, Martin, 68789 St. Leon-Rot (DE); Sigloch, Bernd, 74336 Brackenheim (DE); Broich, Stefan, 74172 Neckarsulm (DE)
(74) Vertreter: Engelhardt, Harald

(56) Entgegenhaltungen:
- EP-A- 1 070 607
- US-A- 2 576 461

## Beschreibung

Die Erfindung betrifft eine Abschleppvorrichtung für ein Kraftfahrzeug nach dem Oberbegriff des Anspruch 1.

Eine gattungsgemäße Abschleppvorrichtung (DE 44 23 633 C2) umfasst eine fahrzeugseitige Aufnahme und ein damit verbindbares, abnehmbares Abschleppösenteil. Dieses besteht aus einem Verbindungsbolzen und einem damit verbundenen Einhängeauge. Am Bolzenende weist der Verbindungsbolzen einen Befestigungsabschnitt auf. Mit diesem Befestigungsabschnitt wird die Abschleppvorrichtung in der fahrzeugseitigen Aufnahme im Gebrauchsfall zug- und druckfest befestigt. Konkret ist der Befestigungsabschnitt am Verbindungsbolzen ein Außengewindeabschnitt und die fahrzeugseitige Aufnahme weist ein entsprechendes Innengewinde für eine Schraubverbindung auf.

Der gattungsgemäße Verbindungsbolzen ist nur mit einem endseitigen Außengewindeabschnitt ausgeführt, so dass entsprechend nur eine endseitige Befestigung des Verbindungsbolzens in der zugehörigen Aufnahme möglich ist. Weitere Befestigungsalternativen bestehen nicht. Für den Fall, dass das Abschleppösenteil an einer Frontaufnahme und an einer Heckaufnahme einsetzbar sein soll, müssen beide Aufnahmen die gleichen Innengewinde aufweisen und bezüglich der jeweils zugeordneten Fahrzeugaußenkontur etwa gleich angeordnet sein, da für beide Fälle eine gleiche wirksame Länge des Verbindungsbolzens zwischen dem Außengewindeabschnitt und dem Einhängeauge vorgegeben ist. Ein solcher gleicher Aufbau einer Frontaufnahme und einer Heckaufnahme sowie eine etwa gleiche Relativlage zur zugeordneten Fahrzeugaußenkontur ist aus fahrzeugbautechnischen Gründen meist nicht zweckmäßig oder schränkt zumindest die Gestaltungsfreiheit an diesen Stellen ungünstig ein.

Bei einer weiter bekannten Abschleppvorrichtung (DE 41 04 671 C2) wird die Problemstellung eines großen Abstandes zwischen der fahrzeugseitigen Aufnahme und der Fahrzeugaußenkontur über eine relativ lange Zugstrebe gelöst. Diese ist im Fahrzeug fest montiert und ein Ende der Zugstrebe ist zug- und druckfest mit einem Karosserieteil verbunden. Das andere Ende der Zugstrebe ist in einer Führungsbuchse formschlüssig gelagert und mit einem endseitigen Außengewindeabschnitt ausgeführt, auf den ein abnehmbares Einhängeauge aufschraubbar ist. Die Führungsbuchse ist an einem Deformationselement angeordnet. Der Verbau der Zugstrebe erfolgt in Fahrzeuglängsrichtung, respektive in Abschlepprichtung. So werden beim Abschleppvorgang die auf das Einhängeauge wirkenden Kräfte über die Zugstrebe auf die karosseriefeste, stabile und relativ weit beabstandete Aufnahme geleitet. Nachteilig bei dieser Anordnung ist, dass eine fest am Fahrzeug montierte Zugstrebe aufwendig und kostenintensiv ist und zudem weder abnehmbar noch in Verbindung mit einer weiteren Aufnahme verwendbar ist.

Zudem ist eine Abschleppvorrichtung bekannt (EP 1 070 607 A1), die unverlierbar am Fahrzeug angebracht ist. Das Abschleppösenteil ist aus einem Einhängeauge und einem Verbindungsbolzen aufgebaut. Am Verbindungsbolzen befinden sich zwei beabstandete Gewindeabschnitte gleichen Durchmessers, die wechselweise in ein Innengewinde einer zugeordneten fahrzeugseitigen Aufnahme einschraubbar sind. Bei axialer Verschiebung des Abschleppösenteils wird die Abschleppvorrichtung von einer eingeschobenen Ruhestellung in eine ausgefahrene Schleppstellung überführt, wobei das Abschleppösenteil jeweils mit einem Gewindeabschnitt im Aufnahmeauge fixiert wird. Weiter ist ein endseitiger Anschlagring vorgesehen, der einerseits das Herausschrauben des Abschleppösenteils verhindert und andererseits eine sichere Gewindeverbindung in der Schleppstellung garantiert. Hier ist somit weder eine Abnahme des Abschleppösenteils noch eine Verwendung in Verbindung mit einer weiteren Aufnahme beabsichtigt oder möglich.

Aufgabe der Erfindung ist es eine gattungsgemäße Abschleppvorrichtung so weiterzubilden, dass nur ein Abschleppösenteil für unterschiedlich aufgebaute Befestigungsstellen am Fahrzeug verwendbar ist.

Diese Aufgabe wird mit den kennzeichnenden Merkmalen des Anspruchs 1 gelöst.

Gemäß Anspruch 1 weist der Fahrzeugaufbau zwei Aufnahmen auf, eine frontseitige Frontaufnahme und eine heckseitige Heckaufnahme. Die Frontaufnahme und die Heckaufnahme weisen unterschiedliche Aufnahmequerschnitte auf und liegen in unterschiedlichen Abständen gegenüber der zugeordneten Fahrzeugaußenkontur nach innen versetzt. Der Verbindungsbolzen weist zwei beabstandete, jeweils der Frontaufnahme und der Heckaufnahme zugeordnete und im Durchmesser jeweils angepasste Befestigungsabschnitte auf und ist vom Bereich des Einhängeauges ausgehend im Durchmesser über die Bolzenlänge abgestuft. Dabei ist die Bolzenlänge aus Befestigungsabschnitten und Verbindungsbolzenabschnitten gebildet.

Vorteilhaft kann das Abschleppösenteil an der Frontaufnahme und an der Heckaufnahme eingesetzt werden. Durch den in Axialrichtung des Verbindungsbolzens abgestuften Durchmesser ist das Abschleppösenteil bei Aufnahmen mit unterschiedlichen Aufnahmequerschnitten einsetzbar. Die unterschiedlichen Abstände zwischen der Frontaufnahme und der Heckaufnahme werden mit einem Verbindungsbolzenabschnitt, der als Längenausgleichselement eingesetzt und in der größeren Aufnahme frei verschiebbar ist, kompensiert. Der für den Abschleppvorgang geforderte Überstand des Einhängeauges über die Fahrzeugaußenkontur ist trotz der unterschiedlichen Abstände der beiden Fahrzeugaußenkonturen zu den zugehörigen Aufnahmen nahezu identisch. Durch die unterschiedlichen Aufnahmequerschnitte der Frontaufnahme und der Heckaufnahme mit den jeweils zugeordneten Befestigungsabschnitten am Verbindungsbolzen ist ein Fehlverbau bzw. eine Verwechslung der zueinandergehörigen Aufnahme mit Befestigungsabschnitt ausgeschlossen.

Der am Fahrzeug befindlichen Aufnahme, die den größeren Abstand zwischen der Fahrzeugaußenkontur und der Aufnahme selbst aufweist, ist gemäß Anspruch 2 der am Bolzenende befindliche Befestigungsabschnitt zugeordnet. Dabei ist mit oder neben der Aufnahme ein Deformationselement zug- und druckfest fahrzeugseitig angebracht. An diesem Deformationselement ist axial zum Verbindungsbolzen in Richtung Fahrzeugaußenkontur eine Führungsbuchse angeordnet. Am Verbindungsbolzen ist ein der Führungsbuchse formschlüssig angepasstes Abstützelement ausgebildet. Damit werden vorteilhaft beim Abschleppvorgang entstehende Querkräfte nicht nur über den Verbindungsbolzen in die Aufnahme übertragen, sondern auch über das Abstützelement und die Führungsbuchse am Deformationselement abgestützt.

Gemäß Anspruch 3 ist der am Fahrzeug befindlichen Aufnahme, die den kleineren Abstand zwischen der Fahrzeugaußenkontur und der Aufnahme selbst aufweist, der Befestigungsabschnitt am Verbindungsbolzen zugeordnet, der näher am Einhängeauge angeordnet ist. Dabei ist der beim Abschleppvorgang entstehende Hebelarm nicht so groß und die entstehenden Kräfte werden ohne zusätzliche Abstützmaßnahmen von der Aufnahme aufgenommen.

In einer bevorzugten Weiterbildung ist gemäß Anspruch 4 die Aufnahme ein Aufnahmerohr. In dem Aufnahmerohr ist ein Verbindungsbolzenabschnitt, der zwischen den Befestigungsabschnitten liegt, formschlüssig aufnehmbar. Dadurch ist eine zusätzliche Abstützung und Führung für das Abschleppösenteil gebildet. Die beim Abschleppvorgang auftretenden Querkräfte können damit besser abgestützt werden.

Um eine eindeutige Position der Abschleppöse in der Gebrauchsstellung zu gewährleisten wird mit Anspruch 5 vorgeschlagen, dass am Verbindungsbolzen Axialanschläge angebracht sind. Durch die in Richtung des Einhängeauges ansteigende Durchmesserabstufung der zueinander beabstandeten Befestigungsabschnitte und Verbindungsbolzenabschnitte sind zwei Axialanschläge in Montagerichtung des Abschleppösenteils gebildet, die jeweils einem Befestigungsabschnitt zugeordnet sind.

In einer bevorzugten Ausführungsform sind nach Anspruch 6 wenigstens eine Aufnahme mit einem Innengewinde und der zugehörige Befestigungsabschnitt am Verbindungsbolzen mit einem zu obigem Innengewinde passenden Außengewinde ausgeführt. Das Abschleppösenteil wird im Gebrauchsfall in die Aufnahme eingeschraubt, eine Verwechslung der Aufnahmen ist aufgrund der unterschiedlichen Durchmesser ausgeschlossen. Durch die oben beschriebenen Axialanschläge in Montagerichtung kann ein Fehlverbau oder ein Falschverbau ebenfalls ausgeschlossen werden. Eine alternative Befestigung nach Anspruch 7 für die Verbindung zwischen Aufnahme und dem zugeordneten Befestigungsabschnitt ist je nach den Gegebenheiten auch mit einem Bajonettverschluss möglich. An einem Abschleppösenteil können jeweils zwei Schraubverbindungen oder zwei Bajonettverschlüsse mit zugehörigen, angepassten Aufnahmen verwendet sein.

Für eine weitere Ausführungsform ist auch eine Kombination der beiden Verbindungsvarianten beansprucht. Dabei ist beispielsweise am Bolzenende ein Bajonettverschluss angeordnet und der andere Befestigungsabschnitt weist eine Schraubverbindung auf. Durch die Kombination von zwei unterschiedlichen Verbindungsvarianten ist ebenfalls eine Verwechslung der beiden Aufnahmen ausgeschlossen.

Zweckmäßig ist nach Anspruch 8 dem Befestigungsabschnitt am Bolzenende die Frontaufnahme zugeordnet. Bei der Frontaufnahme kann an einem im Fahrzeug bereits als Längsträgerverlängerung vorhandenen Deformationselement die Führungsbuchse vorteilhaft angebracht werden. In dieser wird das Abstützelement des Verbindungsbolzens formschlüssig gelagert. Zur Montage des Abschleppösenteiles in die zugehörige Frontaufnahme muss das Abschleppösenteil durch die Führungsbuchse geführt werden und der am Bolzenende befindliche Befestigungsabschnitt wird in der Frontaufnahme befestigt. Dem Befestigungsabschnitt in der Nähe des Einhängeauges ist die Heckaufnahme zugeordnet. Zur Montage des Abschleppösenteiles wird dieses bis zum zugeordneten Befestigungsabschnitt in die Heckaufnahme eingeschoben und dann dort befestigt.

Anhand einer Zeichnung wird ein Ausführungsbeispiel der Erfindung näher erläutert.

Es zeigen:
- Fig. 1: ein Abschleppösenteil
- Fig. 2: einen Schnitt durch eine Frontaufnahme mit montiertem Abschleppösenteil
- Fig. 3: einen Schnitt durch eine Heckaufnahme mit montiertem Abschleppösenteil
- Fig. 4: einen Schnitt durch eine alternative Ausführungsform einer Heckaufnahme mit montiertem Abschleppösenteil

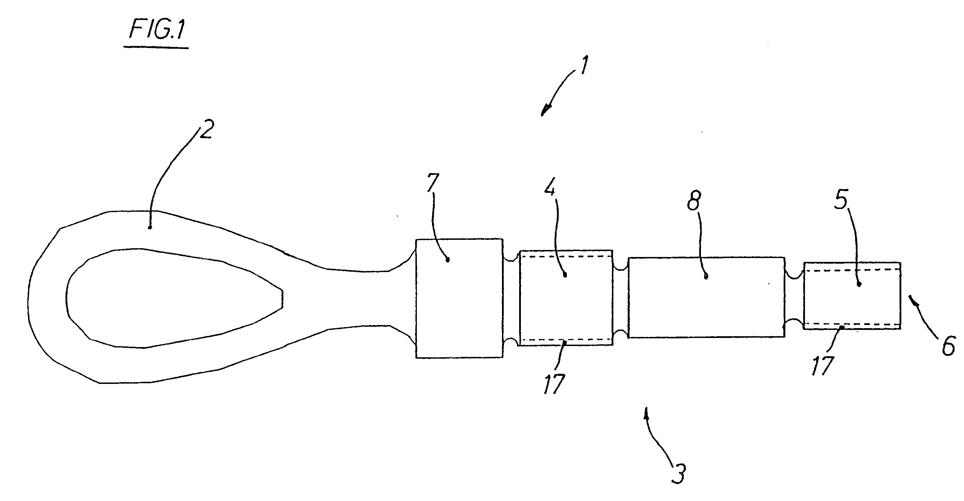

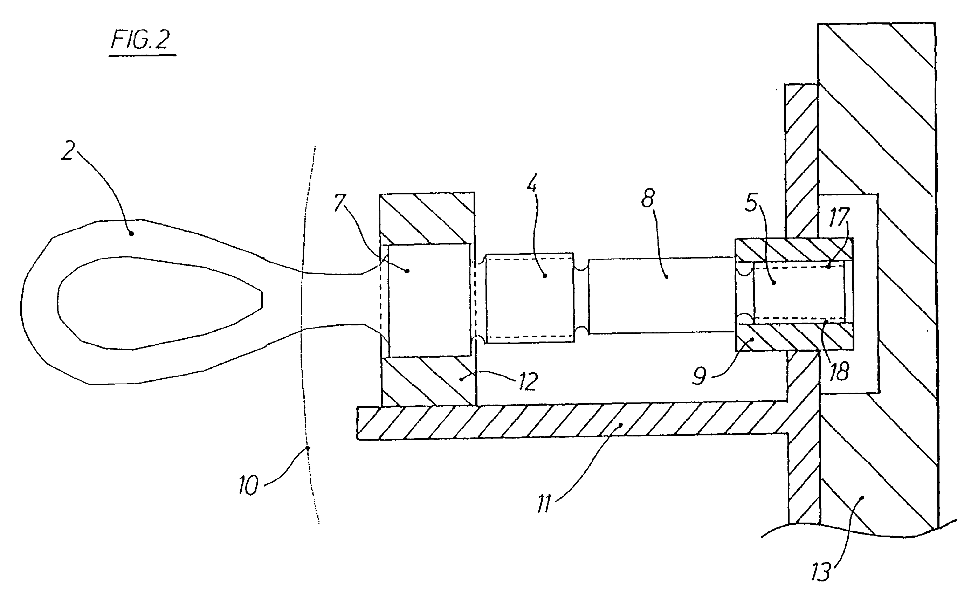

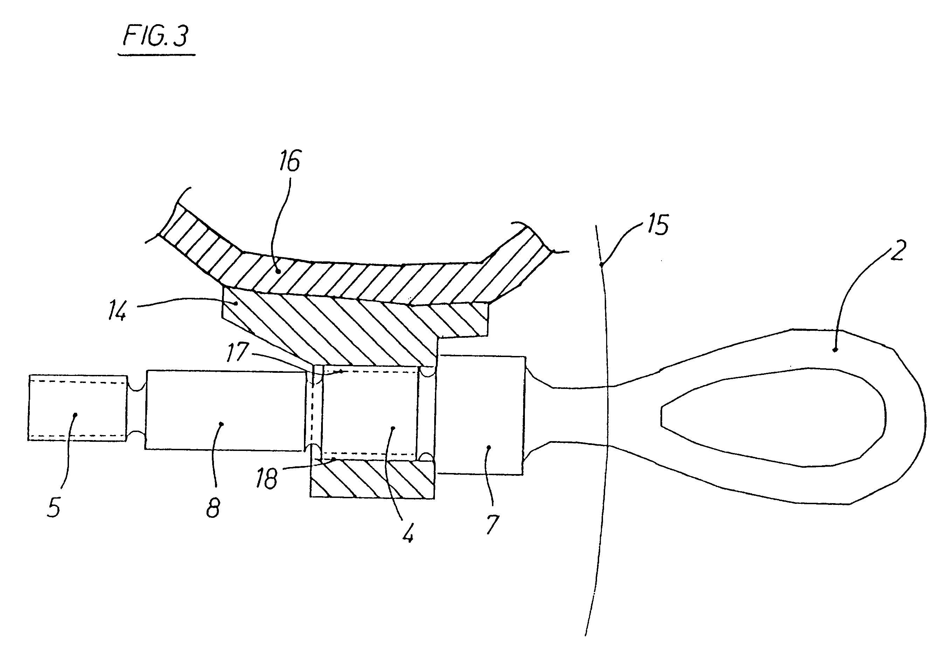

In Fig. 1 ist ein Abschleppösenteil 1 dargestellt. Dieses besteht aus einem Einhängeauge 2 und einem damit verbundenen Verbindungsbolzen 3. Am Verbindungsbolzen 3 sind zwei beabstandete Befestigungsabschnitte 4, 5 ausgebildet, wobei sich ein Befestigungsabschnitt 4 näher am Einhängeauge 2 befindet und der andere Befestigungsabschnitt 5 sich am Bolzenende 6 befindet. Beide Befestigungsabschnitte 4, 5 weisen ein Außengewinde 17 auf. Die Befestigungsabschnitte 4, 5 sind wie aus den Figuren 2 und 3 ersichtlich je einer Frontaufnahme 9 und einer Heckaufnahme 14 am Fahrzeug zugeordnet. Die Frontaufnahme 9 und die Heckaufnahme 14 sind jeweils mit einem Innengewinde 18 ausgeführt, welche zu den jeweiligen Außengewinde 17 der zugeordneten Befestigungsabschnitte 4, 5 angepasst sind. Der Zeichnung sind noch ein Abstützelement 7 und ein Verbindungsbolzenabschnitt 8 zu entnehmen. Der Verbindungsbolzen 3 ist vom Bereich des Einhängeauges 2 ausgehend im Durchmesser über die Bolzenlänge abnehmend abgestuft. Nach jedem einzelnen Abschnitt am Verbindungsbolzen 3 -in axialer Richtung betrachtet- erfolgt eine Durchmesserabstufung, d.h. das Abstützelement 7 weist den größten und der Befestigungsabschnitt 5 am Bolzenende 6 weist den kleinsten Durchmesser auf.

Fig. 2 zeigt eine Frontaufnahme 9 mit montiertem Abschleppösenteil 1. Dabei ist der Befestigungsabschnitt 5 am Bolzenende 6 der Frontaufnahme 9 zugeordnet. Durch ein Innengewinde 18 an der Frontaufnahme 9 und ein Außengewinde 17 an dem zugeordneten Befestigungsabschnitt 5 ist eine Schraubverbindung ausgeführt. Aufgrund des großen Abstandes zwischen Frontaufnahme 9 und der vorderen Fahrzeugaußenkontur 10 ist über ein Deformationselement 11 axial zum Verbindungsbolzen 3 in Richtung der vorderen Fahrzeugaußenkontur 10 eine Führungsbuchse 12 angeordnet. In dieser Führungsbuchse 12 formschlüssig gelagert ist ein Abstützelement 7, das anschließend zum Einhängeauge 2 am Verbindungsbolzen 3 ausgeführt ist. Das Deformationselement 11 ist mit der Frontaufnahme 9 zug- und druckfest an einem Pralltopf 13, respektive am Fahrzeug befestigt. Der Abstand zwischen dem Abstützelement 7 und dem Befestigungsabschnitt 5 am Bolzenende 6 ist mit einem Verbindungsbolzenabschnitt 8, der als Längenausgleichselement eingesetzt ist, überbrückt. Durch die stufenartige Anordnung von Befestigungsabschnitt 5 und Verbindungsbolzenabschnitt 8 wird ein Anschlagbund geschaffen, der als axialer Montageanschlag für die Frontaufnahme dient.

In Fig. 3 ist eine Heckaufnahme 14 mit montiertem Abschleppösenteil 1 dargestellt. Die Heckaufnahme 14 befindet sich in einem im Vergleich zur Frontaufnahme kleinen Abstand zur hinteren Fahrzeugaußenkontur 15. Deshalb ist der Befestigungsabschnitt 4, der näher am Einhängeauge 2 ist, der Heckaufnahme 14 zugeordnet. Durch ein Innengewinde 18 an der Heckaufnahme 9 und ein Außengewinde 17 an dem zugeordneten Befestigungsabschnitt 4 ist eine Schraubverbindung ausgeführt. Durch die stufenartige Anordnung von Befestigungsabschnitt 4 und Abstützelement 7 dient dieses zugleich als axialer Montageanschlag für die Heckaufnahme 14. Die Heckaufnahme 14 ist an einem Stoßfängerträger 16, respektive am Fahrzeug zug- und druckfest befestigt.

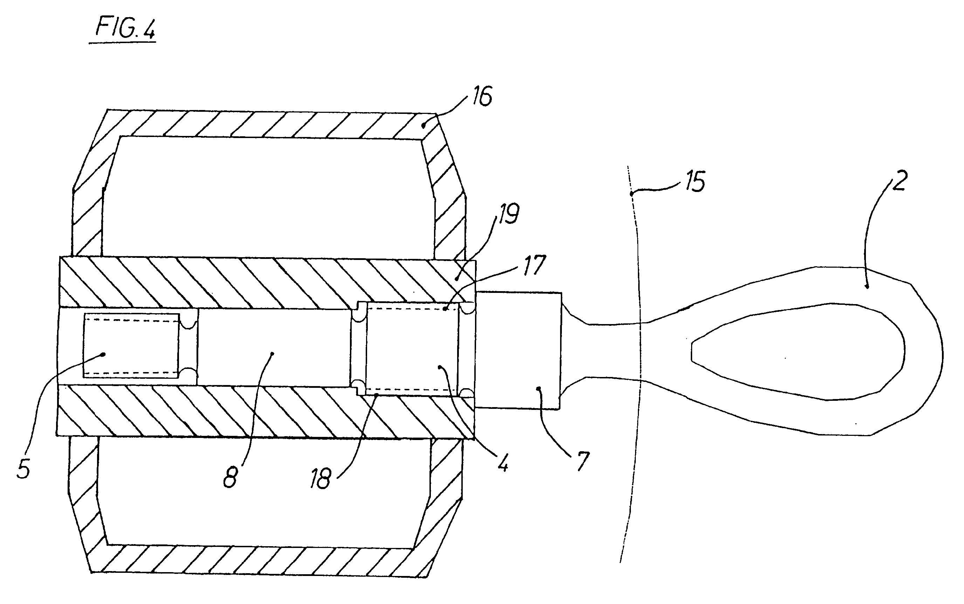

In Fig. 4 ist eine alternative Ausführungsform der Heckaufnahme 14 mit montiertem Abschleppösenteil 1 dargestellt. Die Aufnahme ist als Aufnahmerohr 19 ausgeführt. In einem Endbereich des Aufnahmerohres 19, der der Fahrzeugaußenkontur 15 zugewandt ist, ist ein Innengewinde 18, das dem Befestigungsabschnitt 4 zugeordnet ist, ausgebildet. An das Innengewinde 18 anschließend ist ein Bereich in dem Aufnahmerohr 19 ausgebildet, in dem der Verbindungsbolzenabschnitt 8 formschlüssig aufgenommen ist. Das Aufnahmerohr 19 ist im Stoßfängerträger zug- und druckfest aufgenommen. Alle anderen gezeigten Bauteile weisen die selben Bezugszeichen wie in den Fig. 1 bis 3 auf.

Durch die Anordnung von zwei Befestigungsabschnitten 4, 5 am Verbindungsbolzen 3 kann das Abschleppösenteil 1 sowohl in der Frontaufnahme 9 als auch in der Heckaufnahme 14 eingesetzt werden. Unterschiedliche Aufnahmequerschnitfe an der Frontaufnahme 9 und an der Heckaufnahme 14 werden durch die im Durchmesser abgestuften Befestigungsabschnitte 4, 5 am Verbindungsbolzen 3 aufgenommen. Zugleich wird ein Fehlverbau durch die unterschiedlichen Durchmesser ausgeschlossen. Bei einem großen Abstand zwischen Frontaufnahme 9 und Fahrzeugaußenkontur vorn 10 werden die beim Abschleppvorgang eingeleiteten Kräfte teilweise über den Abstützelement 7 am Verbindungsbolzen 3 auf die Führungsbuchse 12 übertragen. Diese Führungsbuchse 12 ist am Deformationselement 11 angeordnet, das direkt am Fahrzeug befestigt ist. So wird ein sonst ungünstig langer Hebelarm kompensiert und die Dimensionierung der Frontaufnahme 9 befindet sich in einer angemessenen Größe.

Zur Montage des Abschleppösenteiles 1 wird dieses bei der Frontaufnahme 9 in axialer Richtung durch die Führungsbuchse 12 geführt bis mit dem Befestigungsabschnitt 5 am Bolzenende 6 und der Frontaufnahme 9 durch Eindrehen eine Schraubverbindung hergestellt wird. Als Schraubanschlag dient der Anschlagbund des Verbindungsbolzenabschnitts 8, der direkt benachbart zum Befestigungsabschnitt 5 am Verbindungsbolzen 3 angeordnet und im Durchmesser größer abgestuft ist. Bei der Heckaufnahme 14 wird der Verbindungsbolzen 3 durch die Heckaufnahme 14 geführt bis zu dem Befestigungsabschnitt 4, der näher am Einhängeauge 2 ausgeführt ist. Der Einschraubvorgang wird durch das als Axialanschlag dienende Abstützelement 7 begrenzt. Bei der alternativen Ausführungsform in Fig. 4 ist in dem Aufnahmerohr 19 eine Führung integriert, in die der Verbindungsbolzenbereich 8 formschlüssig aufgenommen ist. Dadurch ist eine größere Querkraftabstützung erreicht und das Abschleppösenteil 1 ist besser geführt.

In den dargestellten Anwendungsfällen ist das Abschleppösenteil 1 nur für den Gebrauchsfall montiert. Der für den Abschleppvorgang geforderte Überstand des Einhängeauges 2 über die Fahrzeugaußenkontur ist trotz der unterschiedlichen Abstände der beiden Fahrzeugaußenkonturen 10, 15 zu den zugehörigen Aufnahmen 9, 14 etwa gleich. Bei Nichtgebrauch des Abschleppösenteils ist dieses an einem separaten Ort, vorzugsweise zusammen mit dem Bordwerkzeug im Gepäckraum aufbewahrt.

## Patentansprüche

1. Abschleppvorrichtung für ein Kraftfahrzeug mit einem abnehmbaren Abschleppösenteil (1) bestehend aus einem Verbindungsbolzen (3) und einem damit verbundenen Einhängeauge (2), wobei am Verbindungsbolzen (3) wenigstens ein Befestigungsabschnitt angebracht ist, der in der Gebrauchsstellung der Abschleppvorrichtung in einer am Fahrzeugaufbau befindlichen Aufnahme zug- und druckfest befestigbar ist
**dadurch gekennzeichnet,**
- **dass** zwei Aufnahmen als frontseitige Frontaufnahme (9) und als heckseitige Heckaufnahme (14) am Fahrzeugaufbau angebracht sind,
- **dass** die Frontaufnahme (9) und die Heckaufnahme (14) unterschiedliche Aufnahmequerschnitte aufweisen und in unterschiedlichen Abständen gegenüber der zugeordneten Fahrzeugaußenkontur (10; 15) nach innen versetzt liegen,
- **dass** am Verbindungsbolzen (3) zwei beabstandete, jeweils der Frontaufnahme (9) und der Heckaufnahme (14) zugeordnete und im Durchmesser jeweils angepasste Befestigungsabschnitte (4; 5) angebracht sind,
- **dass** die Befestigungsabschnitte (4; 5) und weitere Verbindungsbolzenabschnitte (8) ausgehend vom Bereich des Einhängeauges im Durchmesser abgestuft über die Bolzenlänge abnehmen.

2. Abschleppvorrichtung nach Anspruch 1, **dadurch gekennzeichnet,**
- **dass** der Aufnahme, die den größeren Abstand zwischen der Fahrzeugaußenkontur und der Aufnahme selbst aufweist, der Befestigungsabschnitt (5) am Bolzenende (6) des Verbindungsbolzens (3) zugeordnet ist,
- **dass** über ein Deformationselement (11), das mit oder neben der Aufnahme zug- und druckfest angebracht ist, eine Führungsbuchse (12) axial zum Verbindungsbolzen (3) in Richtung Fahrzeugaußenkontur angeordnet ist,
- **dass** der Führungsbuchse (12) formschlüssig ein Abstützelement (7) am Verbindungsbolzen (3) zugeordnet ist.

3. Abschleppvorrichtung nach Anspruch 1 oder 2, **dadurch gekennzeichnet, dass** der Aufnahme, die den kürzeren Abstand zwischen der Fahrzeugaußenkontur und der Aufnahme selbst aufweist, der Befestigungsabschnitt (4) am Verbindungsbolzen (3) zugeordnet ist, der näher am Einhängeauge (2) angeordnet ist.

4. Abschleppvorrichtung nach Anspruch 3, **dadurch gekennzeichnet, dass** die Aufnahme ein Aufnahmerohr (19) ist, in dem ein Verbindungsbolzenabschnitt (8), der zwischen den Befestigungsabschnitten (4; 5) liegt,
formschlüssig aufnehmbar ist.

5. Abschleppvorrichtung nach einem der Ansprüche 1 bis 4, **dadurch gekennzeichnet,**
- **dass** durch die in Richtung Einhängeauge (2) ansteigende Durchmesserabstufung der zueinander beabstandeten Befestigungsabschnitte (4; 5) und Verbindungsbolzenabschnitte (8) zwei beabstandete Axialanschläge in Montagerichtung gebildet werden, die jeweils einem Befestigungsabschnitt zugeordnet sind,
- **dass** sich die Außendurchmesser der Axialanschläge in die stufenartige Durchmesseränderung des Verbindungsbolzens (3) einordnen.

6. Abschleppvorrichtung nach einem der Ansprüche 1 bis 5, **dadurch gekennzeichnet, dass** wenigstens eine Aufnahme mit einem Innengewinde (18) und der zugehörige Befestigungsabschnitt am Verbindungsbolzen (3) mit einem zu obigem Innengewinde (18) passenden Außengewinde (17) für eine Schraubverbindung ausgeführt sind.

7. Abschleppvorrichtung nach einem der Ansprüche 1 bis 5, **dadurch gekennzeichnet, dass** wenigstens eine Aufnahme und der zugehörige Befestigungsabschnitt am Verbindungsbolzen als Bajonettverschluss ausgeführt sind.

8. Abschleppvorrichtung nach einem der Ansprüche 3 bis 7, **dadurch gekennzeichnet, dass** die dem Befestigungsabschnitt (5) am Bolzenende (6) zugeordnete Aufnahme eine Frontaufnahme (9) und die dem Befestigungsabschnitt (4) in der Nähe des Einhängeauges (2) zugeordnete Aufnahme eine Heckaufnahme (14) ist.

## Claims

1. Towing device for a motor vehicle having a removable towing loop member (1) consisting of a connecting bar (3) and a coupling eye (2) connected thereto, at least one securing section being arranged on the connecting bar (3) which, in the operative position of the towing device, can be secured in a receiving means present on the vehicle body so as to be tension and compression resistant,
**characterised in that**:
- two receiving means are arranged on the vehicle body, namely a front receiving means (9) to the front and a rear receiving means (14) to the rear,
- the front receiving means (9) and the rear receiving means (14) have different receiving cross sections and are disposed at different distances, offset inwardly, with respect to the associated vehicle outer contour (10; 15),
- on the connecting bar (3) there are arranged two securing sections (4; 5), spaced apart and respectively associated with, and having their respective diameters adapted to, the front receiving means (9) and the rear receiving means (14) respectively,
- the securing sections (4; 5) and other connecting bar sections (8) are of stepped diameter, reducing along the bar length from the region of the coupling eye onwards.

2. Towing device according to claim 1, **characterised in that**:
- the receiving means that is at the greater spacing between the vehicle outer contour and the receiving means itself, has associated with it the securing section (5) at the bar end (6) of the connecting bar (3),
- by way of a deformation member (11) arranged with or adjoining the receiving means so as to be tension and compression resistant, there is arranged a guide bush (12) axially with respect to the connecting bar (3) in the direction of the vehicle outer contour,
- a support member (7) on the connecting bar (3) is associated with positive fit with the guide bush (12).

3. Towing device according to claim 1 or 2, **characterised in that**
the receiving means that is at the shorter spacing between the vehicle outer contour and the receiving means itself, has associated with it the securing section (4) of the connecting bar (3) that is arranged closer to the coupling eye (2).

4. Towing device according to claim 3, **characterised in that** the receiving means is a receiving tube (19) in which can be received with positive fit a connecting bar section (8) that is disposed between the securing sections (4; 5).

5. Towing device according to one of claims 1 to 4, **characterised in that**:
- two axial abutments associated with respective securing sections and spaced apart in the assembly direction are formed by the stepped diameters that increase in the direction of the coupling eye (2), namely the diameters of the securing sections (4; 5) and connecting bar sections (8) spaced from each other,
- the outer diameters of the axial abutments are aranged, in proper sequence, with the stepped changes in diameter of the connecting bar (3).

6. Towing device according to one of claims 1 to 5, **characterised in that** at least one receiving means is constructed with an inner thread (18) and the related securing section on the connecting bar (3) is constructed with an outer thread (17) matching the above inner thread (18) for screw connection.

7. Towing device according to one of claims 1 to 5, **characterised in that** at least one receiving means and its related securing section on the connecting bar are constructed as a bayonet joint.

8. Towing device according to one of claims 3 to 7, **characterised in that** the receiving means associated with the securing section (5) on the bar end (6) is a front receiving means (9) and the receiving means associated with the securing section (4) near the coupling eye (2) is a rear receiving means (14).

## Revendications

1. Dispositif de remorquage pour un véhicule automobile avec une pièce d'anneau de remorquage amovible (1) constituée d'un boulon d'assemblage (3) et d'un oeillet d'accrochage (2) raccordé à ce dernier, au moins une section de fixation étant placée sur le boulon d'assemblage (3), section qui, en position d'utilisation du dispositif de remorquage, peut être fixée résistante à la traction et à la pression dans un logement se trouvant sur la carrosserie du véhicule automobile
**caractérisé en ce que**
- deux logements sont disposés sur la carrosserie du véhicule automobile en tant que logement frontal (9) sur le côté frontal et en tant que logement arrière (14) sur le côté arrière,
- le logement frontal (9) et le logement arrière (14) présentent des sections transversales de logement différentes et sont placés décalés vers l'intérieur dans différents écartements par rapport au contour extérieur du véhicule automobile correspondant (10 ; 15),
- deux sections de fixation (4 ; 5) affectées respectivement au logement frontal (9) et au logement arrière (14) et dont le diamètre est respectivement adapté sont placées sur le boulon d'assemblage (3),
- les sections de fixation (4 ; 5) et les autres sections du boulon d'assemblage (8) diminuent à partir du secteur de l'oeillet d'accrochage avec un étagement diamétral sur la longueur du boulon.

2. Dispositif de remorquage conformément à la revendication 1, **caractérisé en ce que**
- le logement, qui présente le plus grand écartement entre le contour extérieur du véhicule et le logement même, est affecté à la section de fixation (5) sur l'extrémité de boulon (6) du boulon d'assemblage (3),
- par l'intermédiaire d'un élément de déformation (11), qui est placé résistant à la traction et à la pression avec ou près du logement, une douille de guidage (12) est disposée axialement par rapport au boulon d'assemblage (3) dans le sens du contour extérieur du véhicule automobile,
- un élément d'appui (7) sur le boulon d'assemblage (3) est adjoint par coopération de forme à la douille de guidage (12).

3. Dispositif de remorquage conformément à la revendication 1 ou 2, **caractérisé en ce que** la section de fixation (4) sur le boulon d'assemblage (3), qui est disposée la plus proche de l'oeillet d'accrochage (2), est affectée au logement, qui présente le plus petit écart entre le contour extérieur du véhicule automobile et le logement même.

4. Dispositif de remorquage conformément à la revendication 3, **caractérisé en ce que** le logement est un tube de réception (19), dans lequel une section de boulon d'assemblage (8) se situant entre les sections de fixation (4 ; 5) est logeable par coopération de forme.

5. Dispositif de remorquage conformément à l'une des revendications 1 à 4, **caractérisé en ce que**
- en raison de l'étagement diamétral augmentant dans le sens de l'oeillet d'accrochage (2) des sections de fixation (4 ; 5) et des sections de boulon d'assemblage (8) à distance les unes des autres, deux butées axiales à distance l'une de l'autre peuvent être formées dans le sens du montage, qui sont respectivement affectées à une section de fixation.
- les diamètres extérieurs des butées axiales étant intégrés dans la modification échelonnée du diamètre du boulon d'assemblage (3).

6. Dispositif de remorquage conformément à l'une des revendications 1 à 5, **caractérisé en ce qu'**au moins un logement avec un filetage intérieur (18) et la section de fixation correspondante sur le boulon d'assemblage (3) avec un filetage extérieur (17) adapté au filetage intérieur ci-dessus (18) sont réalisés pour un raccord vissé.

7. Dispositif de remorquage conformément à l'une des revendications 1 à 5, **caractérisé en ce qu'**au moins un logement et la section de fixation correspondante sur le boulon d'assemblage sont réalisés sous forme de fermeture à baïonnette.

8. Dispositif de remorquage conformément à l'une des revendications 3 à 7, **caractérisé en ce que** le logement affecté à la section de fixation (5) sur l'extrémité de boulon (6) est un logement frontal (9) et le logement affecté à la section de fixation (4) à proximité de l'oeillet d'accrochage (2) est un logement arrière (14).
